(19) **Europäisches Patentamt**
**European Patent Office**
**Office européen des brevets**

(11) **EP 4 390 862 A1**

(12) **EUROPEAN PATENT APPLICATION**

(43) Date of publication:
**26.06.2024   Bulletin 2024/26**

(21) Application number: **23207887.3**

(22) Date of filing: **06.11.2023**

(51) International Patent Classification (IPC):
**G06V 10/764** (2022.01)    **G06V 10/82** (2022.01)
**G06V 40/16** (2022.01)    **G06V 40/40** (2022.01)

(52) Cooperative Patent Classification (CPC):
**G06V 40/171; G06V 10/764; G06V 10/82;
G06V 40/172; G06V 40/40**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **20.12.2022   US 202218068790**

(71) Applicant: **Meta Platforms Technologies, LLC
Menlo Park, CA 94025 (US)**

(72) Inventors:
• **Kumar, Amit
  Menlo Park (US)**
• **Kaplan, Kirsten
  Menlo Park (US)**
• **Ranjan, Rakesh
  Menlo Park (US)**
• **Dhar, Prithviraj
  Menlo Park (US)**
• **Gupta, Khushi
  Menlo Park (US)**

(74) Representative: **Murgitroyd & Company
165-169 Scotland Street
Glasgow G5 8PL (GB)**

(54) **USER AUTHENTICATION BASED ON STREAM AND PERIOCULAR IMAGES**

(57)    In one embodiment, a method may obtain a plurality of first periocular images of a user during a first time period from a camera of an AR device. The method can use a deep-learning model to generate a plurality of first embeddings based on the plurality of first periocular images and a registered signature of the user based on the plurality of first embeddings. The method can obtain a plurality of second periocular images of the user during a second time period from the camera. The method can use the deep-learning model to generate a plurality of second embeddings based on the plurality of second periocular images and a test signature of the user based on the plurality of second embeddings. The method can perform authentication using the test signature and the registered signature.

FIG. 10

EP 4 390 862 A1

**Description**

<u>**TECHNICAL FIELD**</u>

This disclosure generally relates to artificial reality, such as virtual reality and augmented reality.

<u>**BACKGROUND**</u>

Artificial reality is a form of reality that has been adjusted in some manner before presentation to a user, which may include, e.g., a virtual reality (VR), an augmented reality (AR), a mixed reality (MR), an extended reality (ER), a hybrid reality, or some combination and/or derivatives thereof. Artificial reality content may include completely generated content or generated content combined with captured content (e.g., real-world photographs). The artificial reality content may include video, audio, haptic feedback, or some combination thereof, and any of which may be presented in a single channel or in multiple channels (such as stereo video that produces a three-dimensional effect to the viewer). Artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, a mobile device or computing system, or any other hardware platform capable of providing artificial reality content to one or more viewers.

<u>**SUMMARY**</u>

According to a first aspect, there is provided a method comprising, by a computing system of an artificial reality (AR) device: obtaining, from a camera of the AR device, a plurality of first periocular images of a user during a first time period; generating, using a deep-learning model, a plurality of first embeddings based on the plurality of first periocular images; generating a registered signature of the user based on the plurality of first embeddings; obtaining, from the camera, a plurality of second periocular images of the user during a second time period; generating, using the deep-learning model, a plurality of second embeddings based on the plurality of second periocular images; generating a test signature of the user based on the plurality of second embeddings; and performing authentication based on a comparison between the test signature and the registered signature.

The method may further comprise: determining, using a knowledge distillation algorithm, a spoof likelihood of presentation attacks based on the plurality of second embeddings for the plurality of second periocular images; determining, using the deep-learning model, a similarity score between the plurality of first embeddings for the registered signature and the plurality of second embeddings for the test signature; and in response to determining that the similarity score is greater than a predetermined similarity threshold and the spoof likelihood of presentation attacks is below a predetermined spoof threshold, authenticating the user.

The method may further comprise: in response to determining that the similarity score is smaller than the predetermined similarity threshold, rejecting the user.

The method may further comprise: in response to determining that the spoof likelihood of presentation attacks is greater than the predetermined spoof threshold, rejecting the user.

The knowledge distillation algorithm may include a presentation detection loss based on a standard cross-entropy classification loss to classify a given image as a spoof image and a distillation loss as a regularization term.

The authentication of the user may occur in conjunction with predetermined time periods. The authentication of the user may be triggered when the user navigates into a new virtual environment.

The deep-learning model may be a metric learning model using a shared convolutional encoder which includes Conv-Relu-Conv blocks and may not share weights for the plurality of first periocular images and the plurality of second periocular images.

The method may further comprise: calculating a user-user distance matrix based on similarity scores between a plurality of users; identifying a user from the plurality of users using a Nearest Neighbor algorithm and the user-user distance matrix; and evaluating the performance of the deep-learning model based on True Acceptance Rate at False Acceptance Rate and the user-user distance matrix.

According to a second aspect, there is provided one or more computer-readable storage media embodying software that is operable when executed to carry out the method of the first aspect. The media may be non-transitory.

According to a third aspect, there is provided a system comprising: one or more processors; and one or more computer-readable storage media coupled to one or more of the processors and comprising instructions operable when executed by one or more of the processors to cause the system to carry out the method of the first aspect. The media may be non-transitory.

According to a fourth aspect, there is provided a computer program product comprising instructions which, when the program is executed by a computer, cause the computer to carry out the method of the first aspect.

Particular embodiments described herein relate to systems and methods of a device-unlock approach using a deep neural network to perform eye re-authentication and presentation attack detection (PAD) in a joint framework based on user signatures to authenticate a user against a wearable AR/VR device. The user signatures can include biometric features determined using a plurality of periocular images of the user captured at different time periods by a camera of the wearable AR/VR device. In particular, the camera can capture the periocular images in the facial region in the vicinity of the user's eyes, including eyelids, eyelashes, and eyebrows, etc. The user can opt-in or approve the wearable AR/VR device from capturing images of the eyes and using them for security/authentication purposes. For example, the periocular images are captured by one or more internal-facing eye tracking cameras of the wearable AR/VR device when the user wears the AR/VR device. The number of internal-facing eye tracking cameras depends on the wearable AR/VR device, such as 2 cameras, 4 cameras, or 5 cameras. As another example, the AR/VR systems can include user facing cameras for use cases like foveated rendering, such as eye cameras, or social presence avatars, such as eye and face cameras. In particular, the wearable AR/VR device can be equipped with five user facing cameras to capture various parts from a periocular region of the user, such as left eye, right eye, left side of the mouth, right side of the mouth, and forehead. In particular embodiments, the eye identification and PAD associated with the AR/VR systems are configured to be passively on when in use for entertainment and productivity. In particular embodiments, in response to a request to authenticate the user, the AR/VR systems can access one or more frames of highly personal and sensitive recording data live-captured by the cameras in a short period of time, such as 1.5 seconds (s), when the user is forward-gazing during this time. Based on the recording data, the AR/VR systems can determine a live-captured testing signature of the user to match a previously determined signature of the user, such as a registered signature of the user, stored in a database. In response to determining a match between the registered signature and testing signature of the user, the AR/VR systems can authenticate the user. Likewise, in response to determining a mismatch between the registered signature and testing signature of the user, the AR/VR systems can reject the user.

In particular embodiments, the AR/VR systems may include an authorization server (or other suitable component(s)) that allows users to opt in to or opt out of having their actions logged by the AR/VR systems or shared with other systems (e.g., third-party systems), for example, by setting appropriate privacy settings. A privacy setting of a user may determine what information associated with the user may be logged, how information associated with the user may be logged, when information associated with the user may be logged, who may log information associated with the user, whom information associated with the user may be shared with, and for what purposes information associated with the user may be logged or shared. Authorization servers may be used to enforce one or more privacy settings of the users of the AR/VR systems through blocking, data hashing, anonymization, or other suitable techniques as appropriate.

Furthermore, the AR/VR systems can be programmed to perform a frictionless eye re-authentication and PAD with low latency in an energy efficient manner. For example, the AR/VR systems can perform eye re-authentication and PAD when the user navigates into a new virtual environment. As another example, the AR/VR systems can perform eye re-authentication and PAD periodically for a predetermined amount of time, such as 30 minutes. Conventional user authentication methods can use usernames and/or passwords entered via keyboards to authenticate a user. Likewise, conventional eye-based frameworks can apply significant pre-processing steps to extract the iris region to perform eye re-authentication and PAD independently. In particular, a deep Multitask Learning (MTL) network can generate a model for both eye re-authentication and PAD using disjoint eye re-authentication and PAD datasets. As a result, the generated MTL network suffers from the effect of forgetting which is a challenging problem for training an artificial neural network (ANN) due to the tendency for knowledge of the first machine learning task, such as eye authentication, to be abruptly lost as information relevant to of the second machine learning task, such as PAD, is incorporated. Therefore, it is desired to train a model to perform both eye re-authentication and PAD in a joint framework by reducing the effect of forgetting. As a result, the joint framework can be applied to identify input video streams belonging to a real user while rejecting other users deliberately trying to impersonate the true user.

Furthermore, the AR/VR systems are programmed to train a metric learning model using a shared convolutional encoder, such as a convolutional neural network (CNN). The eye re-authentication method can apply a metric learning model which includes Conv-Relu-Conv blocks and does not share weights for the plurality of periocular images. In particular, the metric learning model is trained using a batch hard triplet loss function which is averaged over one or more individual batch hard triplet loss functions for the plurality of periocular images. Likewise, the AR/VR systems are programmed to apply a knowledge distillation algorithm to determine if the presenting periocular image is a bona fide user or an attacker based on time-varying image parameters, artificial intelligence, hardware features (e.g., pairing illuminator and capture settings, combining info from other sensors with the eye images, etc.). In particular, the AR/VR systems can use the metric learning model for eye re-authentication as a reference model $M_{eye}$ and further train the metric learning model $M_{eye\_pad}$ using a knowledge distillation algorithm to minimize a presentation attack detection loss $L_{pad}$ based on a standard cross-entropy classification loss to classify a given image as a real image or a spoof image. Likewise, the AR/VR systems can use a distillation loss term $L_{diss}$ as a regularization term to minimize a cosine distance between the biometric features for the reference model $M_{eye}$ and the updated metric learning model $M_{eye\_pad}$. Therefore, the joint eye re-authentication and PAD framework is robust to authentication attacks which try to present artificial eye images to interfere eye re-authentication for the user.

The embodiments disclosed herein are only examples, and the scope of this disclosure is not limited to them. Particular embodiments may include all, some, or none of the components, elements, features, functions, operations, or steps of the embodiments disclosed herein. Embodiments according to the invention are in particular disclosed in the attached claims directed to a method, a storage medium, a system and a computer program product, wherein any feature mentioned in one claim category, e.g. method, can be claimed in another claim category, e.g. system, as well. The dependencies or references back in the attached claims are chosen for formal reasons only. However any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

## BRIEF DESCRIPTION OF THE DRAWINGS

FIG. 1A illustrates an example artificial reality system.
FIG. 1B illustrates an example augmented reality system.
FIG. 2 illustrates an example user identification architecture of the AR/VR systems.
FIG. 3 illustrates an example neural network.
FIGs. 4A and 4B illustrate example periocular images from five internal-facing eye tracking cameras of headset.
FIG. 5 illustrates an example metric learning model training for eye re-authentication based on a plurality of periocular images from two internal-facing eye tracking cameras of headset.
FIG. 6A illustrates an example metric learning model based on a triplet loss using an anchor, a positive image, and a negative image.
FIG. 6B illustrates an example embedding space based on an anchor, a positive image, and a negative image.
FIG. 7 illustrates an example metric learning model for both left and right eyes of a user.
FIG. 8A illustrates an example offline evaluation of a metric learning model.
FIG. 8B illustrates an example metric learning model performance associated with the effect of averaging over multiple frames.
FIG. 8C illustrates an example metric learning model performance associated with the effect of the aggregating function for a two camera model.
FIGS. 9A and 9B illustrate example presentation attacks for presentation attack detection.
FIG. 10 illustrates an example method for performing eye re-authentication and presentation attack detection using periocular images.
FIG. 11 illustrates an example computer system.

## DETAILED DESCRIPTION

A low friction authentication experience is important for security and personalization of AR/VR systems. The configuration of the AR/VR systems is designed to perform eye re-authentication and PAD in a joint framework to determine user signatures, such as a registered signature and a testing signature, using input video streams for a plurality of periocular images of the user captured at different time periods by a camera associated with the AR/VR systems. For example, the AR/VR systems can determine a registered signature for a new user in an enrollment process at an initial time of the use of the AR/VR systems. As another example, the AR/VR systems can determine a testing signature of the user in a re-authentication process at a different time of the use of the AR/VR systems. In particular, the AR/VR systems can include one or more internal-facing eye tracking cameras to capture a plurality of periocular images of the user during different time periods. The user can opt-in or approve the AR/VR systems from capturing a plurality of periocular images of the user and using them for security/authentication purposes. For example, the periocular images can include images captured by the camera for a facial region in the vicinity of the user's eyes, such as eyelids, eyelashes, eyebrows, tear duct, eye shape, skin texture, eye color, etc. The periocular images provide important biometric information of the face and iris of the user which can be used for user identification.

The AR/VR systems may be poorly adapted for use of conventional user authentication methods such as usernames and/or passwords entered via keyboards. Likewise, the conventional eye re-authentication method can apply a disjoint framework which includes significant pre-processing steps to extract the iris region to perform eye re-authentication and PAD independently based on disjoint eye re-authentication and PAD datasets. Because of the disjoint training datasets, the conventional eye re-authentication method can suffer from the effect of forgetting which is a difficult problem for training an ANN due to the tendency for knowledge of the first machine learning task, such as eye authentication, to be abruptly lost as information relevant to of the second machine learning task, such as PAD, is incorporated. Thus, the ANN can generate a degraded model without a generalization ability because the second machine learning task can easily override the weights of the ANN from the first machine learning task. Therefore, it is desired to train a model to perform both eye re-authentication and PAD in a joint framework to determine user signatures, such as the registered signature and the testing signature of the user at a different times of the use of the AR/VR systems. The AR/VR systems can compare the testing signature to the register signature to identify input video streams belonging to a real user while rejecting other users deliberately trying to impersonate the true user.

The AR/VR systems is programmed to train a metric learning model to perform eye re-authentication using a shared convolutional encoder and a triplet loss function, such as a batch hard triplet loss function. For example, the eye re-authentication method can apply a metric learning model which includes Conv-Relu-Conv blocks and does not share weights for the plurality of periocular images. Likewise, the AR/VR systems can apply a knowledge distillation algorithm to determine authentication attacks which try to present artificial eye images to interfere eye re-authentication for the user. For example, the AR/VR systems can apply the metric leaming model to determine a plurality of first embeddings associated with the registered signature of a user based on a plurality of first periocular images of the user during a first time period. As another example, the AR/VR systems may apply the metric learning model to determine a plurality of second embeddings associated with the test signature of the user based on a plurality of second periocular images of the user during a second time period. The AR/VR systems can determine a similarity score and a spoof likelihood of presentation attacks between the plurality of first embeddings for the registered signature of the user and the plurality of second embeddings for the test signature of the user. When the similarity score is greater than a predetermined similarity threshold and the spoof likelihood of presentation attacks is smaller than a predetermined spoof threshold, the AR/VR systems can approve the user. When the similarity score is smaller than the predetermined similarity threshold or the spoof likelihood is greater than the predetermined spoof threshold, the AR/VR systems can reject the user.

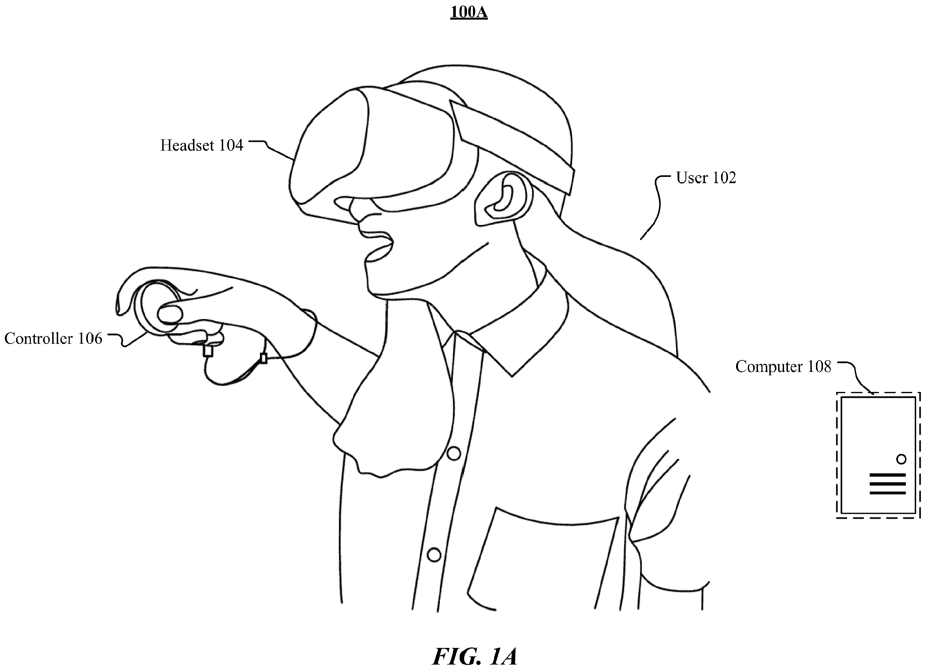

**FIG. 1A** illustrates an example artificial reality system 100A. In particular embodiments, the artificial reality system 100A may comprise a headset 104, a controller 106, and a computing system 108, etc. A user 102 may wear the headset 104 that could display visual artificial reality content to the user 102. The headset 104 may include an audio device that could provide audio artificial reality content to the user 102. The headset 104 may include one or more cameras which can capture images and videos of environments. The number of cameras depends on the hardware of the wearable AR/VR device, such as 2 cameras, 4 cameras, or 5 cameras. For example, the headset 104 may include two cameras to capture two images for left eye and right eye of the user, respectively. As another example, the headset 104 may include five cameras to capture various parts from a periocular region of the user, such as left eye, right eye, left side of the mouth, right side of the mouth, and forehead. The headset 104 may include an eye tracking system to determine the vergence distance of the user 102. The headset 104 may be referred as a head-mounted display (HDM). The controller 106 may comprise a trackpad and one or more buttons. The controller 106 may receive inputs from the user 102 and relay the inputs to the computing system 108. The controller 106 may also provide haptic feedback to the user 102. The computing system 108 may be connected to the headset 104 and the controller 106 through cables or wireless connections. The computing system 108 may control the headset 104 and the controller 106 to provide the artificial reality content to and receive inputs from the user 102. The computing system 108 may be a standalone host computer system, an on-board computer system integrated with the headset 104, a mobile device, or any other hardware platform capable of providing artificial reality content to and receiving inputs from the user 102.

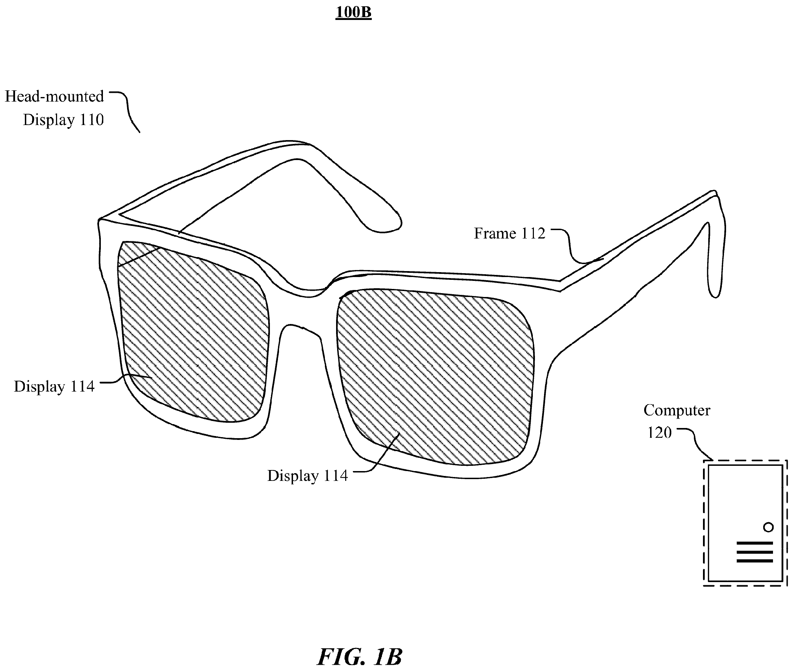

**FIG. 1B** illustrates an example augmented reality system 100B. The augmented reality system 100B may include a head-mounted display (HMD) 110 (e.g., glasses) comprising a frame 112, one or more displays 114, and a computing system 120. The displays 114 may be transparent or translucent allowing a user wearing the HMD 110 to look through the displays 114 to see the real world and displaying visual artificial reality content to the user at the same time. The HMD 110 may include an audio device that may provide audio artificial reality content to users. The HMD 110 may include one or more cameras which can capture images and videos of environments. The HMD 110 may include an eye tracking system to track the vergence movement of the user wearing the HMD 110. The augmented reality system 100B may further include a controller comprising a trackpad and one or more buttons. The controller may receive inputs from users and relay the inputs to the computing system 120. The controller may also provide haptic feedback to users. The computing system 120 may be connected to the HMD 110 and the controller through cables or wireless connections. The computing system 120 may control the HMD 110 and the controller to provide the augmented reality content to and receive inputs from users. The computing system 120 may be a standalone host computer system, an on-board computer system integrated with the HMD 110, a mobile device, or any other hardware platform capable of providing artificial reality content to and receiving inputs from users.

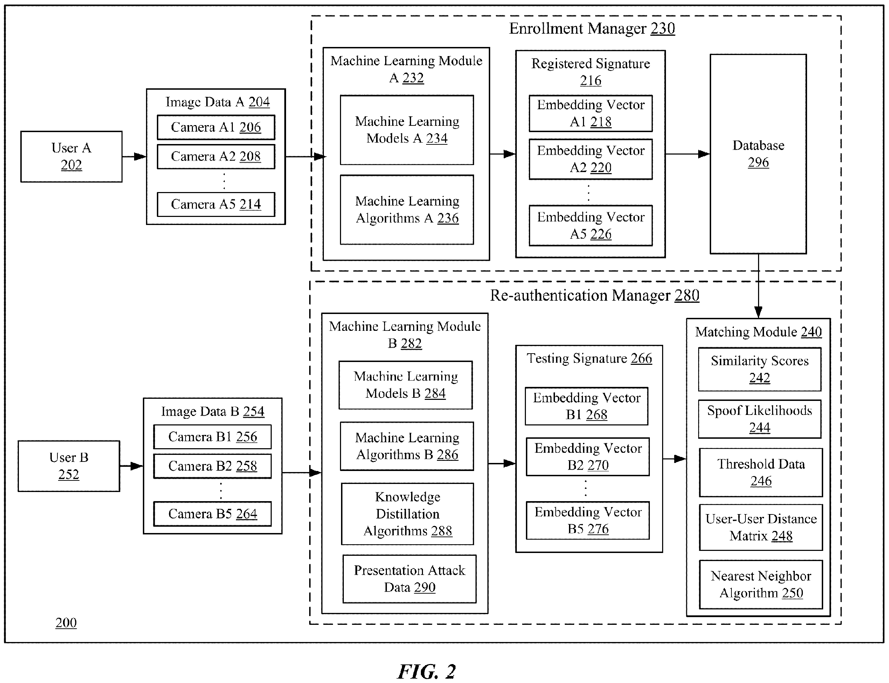

FIG. 2 illustrates an example user identification architecture 200 of the AR/VR systems. In particular embodiments, the user identification architecture 200 may include an enrollment manager 230 and a re-authentication manager 280. For example, the enrollment manager 230 and the re-authentication manager 280 are programmed to apply on-device computation to determine a registered signature and a testing signature for the user, respectively. As another example, the enrollment manager 230 and the re-authentication manager 280 are programmed to use an external source of edge compute to determine a registered signature and a testing signature for the user, respectively. In particular embodiments, the enrollment manager 230 can be applied to enroll a user during a first time period, such user A 202, against the headset 104 by generating the registered signature of the user, such as registered signature 216, when the user initiates the use of the headset 104 in a virtual environment for entertainment or business operations. The enrollment manager 230 can store the registered signature of the user in a database 296. In particular embodiments, the re-authentication manager 280 can be applied to perform eye re-authentication for the user during a second time period, such as user B 252, by generating the testing signature of the user, such as user biometric signature data B 290, when the user attempt to use the headset 104 to enter another virtual environment for entertainment or business operations. In particular embodiments, the re-authentication manager 280 can apply a matching module 240 to determine a similarity score 242 and a spoof likelihood 244 by comparing the registered signature of the user, such as registered signature 216, with the testing signature of the user, such as testing signature 266. In response to determining the similarity score 242 is above a predetermined similarity threshold in threshold data 246 and the spoof likelihood 244 is below a predetermined spoof threshold in the threshold data 246, the AR/VR systems can authenticate the user. In response to determining the similarity score 242 is below the predetermined similarity threshold or the spoof likelihood 244 is above the predetermined spoof threshold, the AR/VR can reject the user.

In particular embodiments, one or more of the content objects of the user identification architecture 200 of the AR/VR systems may be associated with a privacy setting. The privacy settings (or "access settings") for an object, such as the periocular images of a user, may be stored in any suitable manner, such as, for example, in association with the object, in the enrollment manager 230 and re-authorization manager 280, in another suitable manner, or any combination thereof. A privacy setting of an object may specify how the object (or particular information associated with an object) can be accessed (e.g., viewed or shared) using the user identification architecture 200 of the AR/VR systems. Where the privacy settings for an object allow a particular user to access that object, the object may be described as being "visible" with respect to that user. As an example and not by way of limitation, a user of the user identification architecture 200 of the AR/VR systems may specify privacy settings for a user-profile page that identify a set of users that may access the work experience information on the user-profile page, thus excluding other users from accessing the information. In particular embodiments, the privacy settings may specify a "blocked list" of users that should not be allowed to access certain information associated with the object. In other words, the blocked list may specify one or more users or entities for which an object is not visible. As an example and not by way of limitation, a user may specify a set of users that may not access the periocular images associated with the user, thus excluding those users from accessing the periocular images associated with the user (while also possibly allowing certain users not within the set of users to access the periocular images associated with the user). In particular embodiments, privacy settings may be associated with particular periocular images. Privacy settings of periocular images may specify how the periocular images, information associated with the periocular images, or content objects associated with the periocular images can be accessed using the user identification architecture 200 of the AR/VR systems. As an example and not by way of limitation, the enrollment manager 230 corresponding to a particular periocular image may have a privacy setting specifying that the periocular image may only be accessed by the user in the particular periocular image. In particular embodiments, privacy settings may allow users to opt in or opt out of having their actions logged by the user identification architecture 200 of the AR/VR systems. In particular embodiments, the privacy settings associated with an object may specify any suitable granularity of permitted access or denial of access. As an example and not by way of limitation, access or denial of access may be specified for particular users (e.g., only me, my roommates, and my boss), users within a particular degrees-of-separation (e.g., friends, or friends-of-friends), user groups (e.g., the gaming club, my family), user networks (e.g., employees of particular employers, students or alumni of particular university), all users ("public"), no users ("private"), users of the AR/VR systems, particular applications (e.g., third-party applications, external websites), other suitable users or entities, or any combination thereof. Although this disclosure describes using particular privacy settings in a particular manner, this disclosure contemplates using any suitable privacy settings in any suitable manner.

In particular embodiments, the enrollment manager 230 and the re-authentication manager 280 may be authorization/privacy servers for enforcing privacy settings. In response to a request from a user (or other entity) for a particular object stored in a database 296, the user identification architecture 200 of the AR/VR systems may send a request to the database 296 for the object. The request may identify the user associated with the request and may only be sent to the user if the authorization server determines that the user is authorized to access the object based on the privacy settings associated with the object. If the requesting user is not authorized to access the object, the authorization server may prevent the requested object from being retrieved from the database 296, or may prevent the requested object from being sent to the user. In the search query context, an object may only be generated as a search result if the querying user is authorized to access the object. In other words, the object must have a visibility that is visible to the querying user. If the object has a visibility that is not visible to the user, the object may be excluded from the search results. Although this disclosure describes enforcing privacy settings in a particular manner, this disclosure contemplates enforcing privacy settings in any suitable manner.

In an embodiment, when the enrollment manager 230 enrolls user A 202 against the header 104 during the first time period, the AR/VR systems can obtain a first recording of input video stream data, such as image data A 204, which includes a plurality of frames, such as N frames, of periocular images of the user during a first time period. In particular, the N frames of periocular images are encoded, such as camera A1 206, camera A2 208, camera A3 210, camera A4 212, and camera A5 214. In particular, the plurality of frames of periocular images are encoded, such as camera A1 206, camera A2 208, camera A3 210, camera A4 212, and camera A5 214, by the one or more cameras of the headset 104 which capture the image data from a periocular region of the user. For example, the headset 104 has five inward facing infrared cameras that capture different parts of the face of the user, such as left eye and right eye, left and right sides of the mouth, and forehead. As another example, the first recording is collected in 1.5 s when the user is forward-gazing during this time. The recording is collected at 72 fps and each frame has a resolution of 400 x 400 pixels. Each frame of the encoded periocular images has multiple images, one from each camera included in the headset 104. In particular, camera A1 206 can store the N frames of periocular images of user A 202 obtained from the first camera of the headset 104. Camera A2 208 can store the N frames of periocular images of user A 202 obtained from the second camera of the headset 104. Camera A3 210 can store the N frames of periocular images of user A 202 obtained from the third camera of the headset 104. Camera A4 212 can store the N frames of periocular images of user A 202 obtained from the fourth camera of the headset 104. Camera A5 214 can store the N frames of periocular images of user A 202 obtained from the fifth camera of the headset 104.

Furthermore, the enrollment manager 230 is programmed to assess the obtained image data for the user, such as image data A 204, using a machine learning algorithm to determine the registered signature of the user. For example, the enrollment manager 230 can include a machine learning module A 232 to generate one or more machine learnings models A 234 based on one or more machine learning algorithms A 236. The machine learning models A 234 can be a metric learning model based on a shared convolutional encoder. In particular, the machine learning models A 234 can include Conv-Relu-Conv blocks that do not share weights for the plurality of periocular images. The machine learning model is trained based on biometric features from all input images that feed into a shared convolutional encoder to determine the registered signature 216 for the user. The registered signature 216 of the user can include one or more first embedding vectors, such as embedding vector A1 218, embedding vector A2 220, embedding vector A3 222, embedding vector A4 224, and embedding vector A5 226 for the plurality of periocular images captured by the one or more cameras of the headset 104. In particular, embedding vector A1 218 is determined using the metric learning model based on the input periocular images associated with camera A1 206. Embedding vector A2 220 is determined using the metric learning model based on the input periocular images associated with camera A2 208. Embedding vector A3 222 is determined using the metric learning model based on the input periocular images associated with camera A3 210. Embedding vector A4 224 is determined using the metric learning model based on the input periocular images associated with camera A4 212. Embedding vector A5 226 is determined using the metric learning model based on the input periocular images associated with camera A5 214.

Each of the first embedding vectors in the registered signature is L2 normalized to calculate a loss function, such as a batch hard triplet loss function. The enrollment manager 230 is programmed to determine a total loss function by summing the individual loss functions associated with each of the first embedding vectors. Likewise, the enrollment manager 230 can train different machine learning models for a plurality of periocular images associated with the left eye only or right eye only for the user. As a result, the enrollment manager 230 can determine a total loss function based on the one or more first embedding vectors associated with the left eye and/or the right eye of the user. The enrollment manager 230 can store the determined registered signature 216 in a database 296 for eye authentication.

Furthermore, the enrollment manager 230 is programmed to train machine learnings models A 234 using a historical dataset which includes a plurality of periocular images captured by one or more cameras of headset 104 from many users. For example, each user has several video stream recordings of periocular images collected at 72 fps in 1.5 s. The AR/VR systems can use a simple data split technique to separate the recorded periocular images for all the users used for the training, validation, and testing of the metric learning model. An example of the data split technique considers 70% of the users for model training (e.g., tuning of the model parameters), 10% of the users for validation (e.g., performance validation for each different set of model parameters), and 20% of the users for testing the final model. However, the data split technique may result in the over-fitting problem of the metric learning model with limited generalization capabilities. For example, the deployed model will underperform when predicting unseen samples. Although only an example embodiment has been described in detail above, those skilled in the art will readily appreciate that many modifications are possible in the example embodiments without materially departing from this invention.

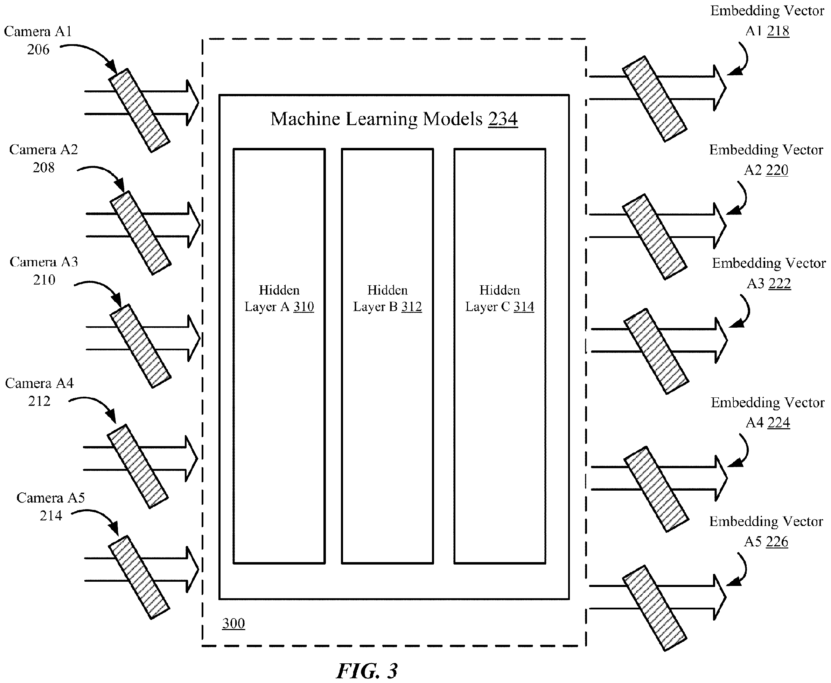

Turning to FIG. 3, **FIG. 3** illustrates an example neural network 300. The neural network models A 234 is trained using one or more machine learning algorithms A 236 for determining embedding data, such as embedding vector A1 218, embedding vector A2 220, embedding vector A3 222, embedding vector A4 224, and embedding vector A5 226, of the registered signature 216 of the user. In particular, the neural network 300 can be a metric learning model using a convolutional encoder based on a plurality of periocular images, such as camera A1 206, camera A2 208, camera A3 210, camera A4 212, and camera A5 214, collected by eye tracking cameras of the headset 104 to determine the embedding data associated with the user.

The neural network 300 includes three hidden layers, such as hidden layer A 310, hidden layer B 312, and hidden layer C 314, which may be a convolutional layer, a pooling layer, a rectified linear unit (ReLU) layer, a softmax layer, a regressor layer, a dropout layer, and/or various other hidden layer types. These hidden layers can be arranged in any order as long as they satisfy the input/output size criteria. Each layer comprises of a set number of image filters. The output of filters from each layer is stacked together in the third dimension. This filter response stack then serves as the input to the next layer(s). In an embodiment, each hidden layer is a combination of a convolutional layer, a pooling layer, and a ReLU layer in a multilayer architecture. For example, each hidden layer, such as hidden layer A 310, hidden layer B 312, and hidden layer C 314, has a convolutional layer, a pooling layer, and a ReLU layer. The hidden layer A 310 may be down-sampling blocks to extract high-level features from the input data set. The hidden layer C 314 may be up-sampling blocks to output the classified or predicted output data set. The hidden layer B 312 may perform residual stacking as bottleneck between down-sampling blocks, such as hidden layer A 310, and up-sampling blocks, such as hidden layer C 314. The hidden layer C 314 may include a softmax layer or a regressor layer to classify or predict a predetermined class or a value based on input attributes.

Furthermore, in a convolutional layer, the input data set is convolved with a set of learned filters, designed to highlight specific characteristics of the input data set. A pooling layer produces a scaled down version of the output. This is achieved by considering small neighborhood regions and applying the desired operation filter (e.g. min, max, mean, etc.) across the neighborhood. A ReLU layer enhances the nonlinear property of the network by introducing a non-saturating activation function. One example of such a function is to threshold out negative responses (set negative values to zero). A fully connected layer provides a high-level reasoning by connecting each node in the layer to all activation nodes in the previous layer. A softmax layer maps the inputs from the previous layer into a value between 0 and 1 which allows for interpreting the outputs as probabilities and selection of classified facie with highest probability. A dropout layer offers a regularization technique for reducing network over-fitting on the training data by dropping out individual nodes with a certain probability. A loss layer (utilized in training) defines the weight dependent cost function that needs to be optimized (bring cost down to zero) for improved accuracy.

Turning back to FIG. 2, the re-authentication manager 280 is programmed to perform eye re-authentication for the user, such as user B 252, who can be a current user of the headset 104. For example, the re-authentication of the user can occur when the user navigates into a new virtual environment. As another example, the re-authentication of the user can occur periodically for a predetermined amount of time, such as 30 minutes. When the re-authentication of the user occurs, the AR/VR systems can send a request to the re-authentication manager 280 to obtain a recording of input video stream data, such as image data B 254, which can include a plurality of frames, such M frames, of periocular images of the user during a second time period. In particular, the M frames of periocular images are encoded, such as camera B1 256, camera B2 258, camera B3 260, camera B4 262, and camera B5 264, by the one or more cameras of the headset 104 which capture the image data B 254 from a periocular region of the user. Each frame of the encoded periocular images has multiple images, one from each camera included in the headset 104. In particular, camera B1 256 can store M frames of periocular images of user B 252 obtained from the first camera of the headset 104. Camera B2 258 can store M frames periocular images of user B 252 obtained from the second camera of the headset 104. Camera B3 260 can store M frames periocular images of user B 252 obtained from the third camera of the headset 104. Camera B4 262 can store M frames periocular images of user B 252 obtained from the fourth camera of the headset 104. Camera B5 264 can store M frames periocular images of user B 252 obtained from the fifth camera of the headset 104.

Furthermore, the re-authentication manager 280 is programmed to assess the image data B 254 for the user using one or more machine learning algorithms B 286 to determine a testing signature of the user. For example, the re-authentication manager 280 can include a machine learning module B 282 to generate one or more machine learnings models B 284 using one or more machine learning algorithms B 286. The machine learning models B 284 can include a metric learning model based on a shared convolutional encoder. In particular, the machine learning models B 284 can include Conv-Relu-Conv blocks that do not share weights for the plurality of periocular images. The machine learning model is trained based on biometric features from all input images that feed into a shared convolutional encoder to determine the testing signature 266 of the user. The testing signature 266 of the user can include one or more second embedding vectors, such as embedding vector B1 268, embedding vector B2 270, embedding vector B3 272, embedding vector B4 274, and embedding vector B5 276 for the one or more cameras of the headset 104. In particular, embedding vector B1 268 is determined using the metric learning model based on the input periocular images associated with camera B1 256. Embedding vector B2 270 is determined using the metric learning model based on the input periocular images associated with camera B2 258. Embedding vector B3 272 is determined using the metric learning model based on the input periocular images associated with camera B3 260. Embedding vector B4 274 is determined using the metric learning model based on the input periocular images associated with camera B4 262. Embedding vector B5 276 is determined using the metric learning model based on the input periocular images associated with camera B5 264.

Each of the second embedding vectors in the testing signature 266 is L2 normalized to calculate a loss function, such as a batch hard triplet loss function. The re-authentication manager 280 is programmed to determine a total loss function by summing the individual loss functions associated with each of the second embedding vectors. Likewise, the re-authentication manager 280 can train different machine learning models for the plurality of periocular images associated with the left eye only or right eye only for the user. As a result, the re-authentication manager 280 can determine the one or more second embedding vectors associated with the left eye or the right eye of the user to calculate a total loss function. The re-authentication manager 280 can apply a matching module 240 to determine a similarity score 248 between user A 202 and user B 252 based on equation 1 using the registered signature 216 of user A 202 and the testing signature 266 of user B 252. For example, a similarity score 248 can be calculated based on the first and second embedding vectors for user A 202 and user B 252.

$$Sim(User_a, User_b) = \sum_1^C Sim_c(Average_{i=1}^{i=N}(embA_{i,c}), Average_{j=1}^{j=M}(embB_{j,c}))$$

<div align="right">Equation 1</div>

where $embA_{i,c}$ is the embedding vector for $User_a$, frame $i$, and camera $c$, $embB_{j,c}$ is the embedding vector for $User_b$, frame $j$, and camera c. $Sim(User_a, User_b)$ is the similarity score between $User_a$ and $User_b$.

Furthermore, the re-authentication manager 280 can apply a knowledge distillation algorithm 288 to update the metric learning model to determine a spoof likelihood 244 of presentation attacks. The re-authentication manager 280 can apply a joint framework to perform reliable classification for both eye identification and presentation attacks by reducing the effect of forgetting which is a challenge for a conventional artificial neural network for eye identification and PAD, such as a deep MTL network. As a result, the joint framework can be applied to identify input video streams belonging to a real user while rejecting other users deliberately trying to impersonate the true user.

In particular, the re-authentication manager 280 can use a trained metric learning model $M_{eye}$ for eye re-authentication as a starting model to train a machine learning model $M_{eye\_pad}$ based on a presentation attack detection dataset, such presentation attack data 290. The re-authentication manager 280 can use a loss function $L_{pad\_diss}$ associated with presentation attack detection based on a knowledge distillation algorithm 288 to generate a machine learning model B 284 for performing both eye identification and presentation attack detection. The loss function $L_{pad\_diss}$ has a presentation attack detection loss $L_{pad}$ and a distillation loss $L_{diss}$ based on equation 2. The re-authentication manager 280 can determine the machine learning model $M_{eye\_pad}$ by minimizing the presentation attack detection loss $L_{pad}$ based on a standard cross-entropy classification loss to classify a given image as a real image or a spoof image. Further, the re-authentication manager 280 can use a distillation loss term $L_{diss}$ as a regularization term to minimize a cosine distance between the obtained embedding vectors from the trained metric learning model $M_{eye}$ and the machine learning model $M_{eye\_pad}$ based on equation 3.

$$L_{pad\_diss} = L_{pad} + \lambda L_{diss} \qquad\qquad \text{Equation 2}$$

$$L_{diss} = 1 - \frac{emb_{M_{eye}} \cdot emb_{M_{pad\_eye}}}{\left\| emb_{M_{eye}} \right\| \left\| emb_{M_{pad\_eye}} \right\|} \qquad \text{Equation 3}$$

where $L_{pad\_diss}$ is a loss function associated with presentation attack detection based on a knowledge distillation algorithm, $L_{pad}$ is a loss function associated with presentation attack detection, and $L_{diss}$ is a distillation loss function, $\lambda$ is a regularization term, $emb_{M_{eye}}$ is the embedding vector determined by the trained metric learning model $M_{eye}$ for eye authentication, and $emb_{M_{pad\_eye}}$ is the embedding vector determined by the machine learning model $M_{eye\_pad}$ based on the presentation attack detection dataset.

Furthermore, the re-authentication manager 280 can use the trained metric learning model $M_{eye\_pad}$ for presentation attack detection as a starting model to train a machine learning model $M'_{eye\_pad}$ for eye identification and PAD in an MTL fashion using eye re-authentication and PAD datasets. The training for the metric learning model $M'_{eye-pad}$ for eye identification and PAD is alternated after every iteration. In particular, the metric learning model $M'_{eye-pad}$ is trained to mimic the starting model $M_{eye\_pad}$ to reduce the effect of forgetting using the same knowledge distillation algorithm 288. The re-authentication manager 280 can use a loss function $L_{multi}^{id}$ or $L_{multi}^{pad}$ for eye identification and

**EP 4 390 862 A1**

PAD in joint framework based on a knowledge distillation algorithm 288 to generate a machine learning model B 284 for performing both eye identification and presentation attack detection. The re-authentication manager 280 can feed the eye re-authentication dataset to both $M_{eye\_pad}$ and $M'_{eye-pad}$ and obtain features $emb_{M_{pad\_eye}}$ and $emb_{M'_{pad\_eye}}$ respectively. $M_{eye\_pad}$ remains frozen in this step. The loss function $L_{multi}^{id}$ or $L_{multi}^{pad}$ includes a distillation loss term $L'_{diss}$ as a regularization term to minimize a cosine distance between the obtained embedding vectors from the trained metric learning model $M'_{eye-pad}$ and the machine learning model $M_{eye\_pad}$ based on equation 4. The re-authentication manager 280 can use the eye re-authentication dataset to train $M'_{eye\_pad}$ for eye re-authentication with a loss function $L_{multi}^{id}$ at iteration i based on equation 5. The re-authentication manager 280 can use the PAD dataset to train $M'_{eye\_pad}$ for PAD with a loss function $L_{multi}^{pad}$ at iteration $i+1$ based on equation 6. The re-authentication manager 280 can alternatively use the loss function $L_{multi}^{id}$ and $L_{multi}^{pad}$ to determine the machine learning model $M'_{eye\_pad}$.

$$L'_{diss} = 1 - \frac{emb_{M_{pad\_eye}} \cdot emb_{M'_{pad\_eye}}}{\left\| emb_{M_{pad\_eye}} \right\| \left\| emb_{M'_{pad\_eye}} \right\|} \qquad \text{Equation 4}$$

$$L_{multi}^{id} = L_{id} + \lambda_2 L'_{diss} \qquad \text{Equation 5}$$

$$L_{multi}^{pad} = L_{pad} + \lambda_2 L'_{diss} \qquad \text{Equation 6}$$

where $L_{multi}^{id}$ is a loss function associated with eye re-authentication, $L_{multi}^{pad}$ is a loss function associated with presentation attack detection based on a knowledge distillation algorithm, $L_{id}$ is a triplet loss function associated with eye re-authentication, $L_{pad}$ is a standard loss function associated with presentation attack detection, $L'_{diss}$ is a distillation loss function, $\lambda_2$ is a regularization term, $emb_{M_{pad\_eye}}$ is the embedding vector determined by the metric learning model $M_{eye\_Pad}$, and $emb_{M'_{pad\_eye}}$ is the embedding vector determined by the metric learning model $M'_{eye\_pad}$.

Furthermore, the user identification architecture 200 can evaluate a machine learning model for the validation users based on a True Acceptance Rate (TAR) at False Acceptance Rate (FAR). For example, the TAR at FAR can be 2e-5. In particular, the user identification architecture 200 can apply an offline evaluation to increase model robustness for real-time implementation as all the frames are captured within about 10 millisecond interval. For example, the user identification architecture 200 can determine a user-user distance matrix 248 using video stream recordings for the validation users. Based on the user-user distance matrix 248, the user identification architecture 200 can identify the user identity using a Nearest Neighbor algorithm 250. As a result, the user identification architecture 200 can determine a TAR@FAR to evaluate the performance of the machine learning model.

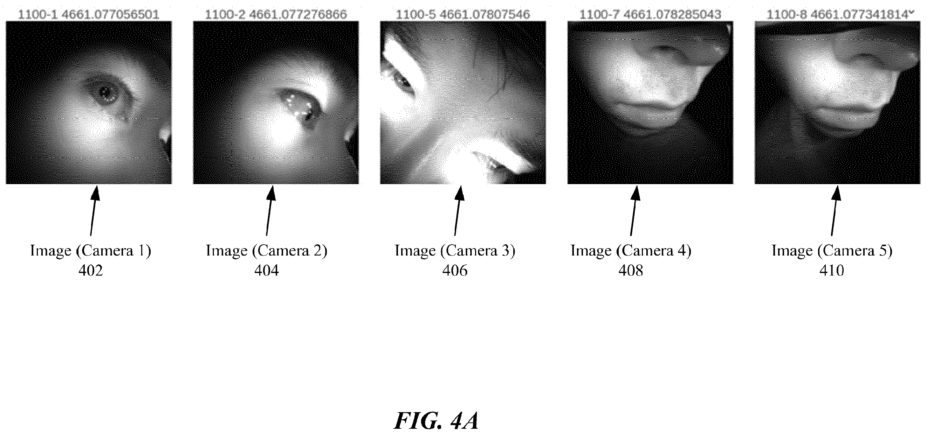

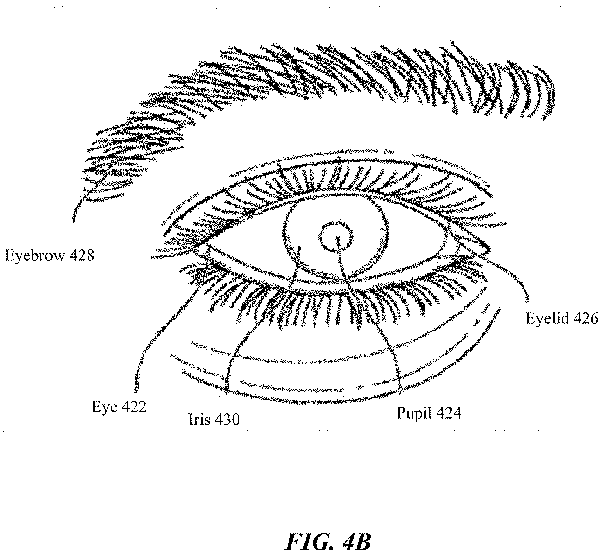

**FIGs. 4A and 4B** illustrate example periocular images from five internal-facing eye tracking cameras of headset 104. The headset 104 has five internal-facing eye tracking cameras for use cases such as foveated rendering and dynamic uniformity correction. FIG. 4 shows a frame of periocular images comprising five camera images coming in at one timestamp, such as image (camera 1) 402, image (camera 2) 404, image (camera 3) 406, image (camera 4) 408, and image (camera 5) 410, that focus on different parts of a periocular region of a user. For example, each camera image can be captured by one of five user facing cameras which look at various parts of the face, such as left and right eyes, left and right sides of mouth, and forehead. In particular, these five user facing cameras can be 850 nanometers (nm) infrared cameras with a resolution of 400x400 pixels. Each of these five tracking cameras can use near infrared (NIR) light-emitting diode (LED) to illuminate each region of the face of the user. FIG. 4B shows an example periocular region of the user which may include an eye 422, a pupil 424, an eyelid 426, an eyebrow 428, and an iris 430.

As another example, the five cameras associated with headset 104 can record a plurality of frames of periocular images for a predetermined time period, such as 1.5 seconds, at a predetermined frame rate, such 72 fps when the user is forward-gazing during this time. It is preferred that the user looks right into the camera to record high quality periocular images for the user when the AR/VR systems perform eye re-authentication and presentation attack detection. The periocular images can have a low signal to noise ratio when the user looks in various directions during eye re-authentication and presentation attack detection because the captured periocular images can include less eye information. Thus, the AR/VR systems can record multiple frames of periocular images to determine a signature of the user. For

10

example, the AR/VR systems can determine a registered signature of a user using a plurality of live-captured recordings of periocular images of the user during a first time period. The determined registered signature of the user can be stored in a database. Likewise, the AR/VR systems can determine a testing signature of the user based on a plurality of live-captured recordings of periocular images of the user during a second time period. As a result, the AR/VR systems can perform eye re-authentication and presentation attack detection for the user by comparing stored registered signature to the live-captured testing signature of the user.

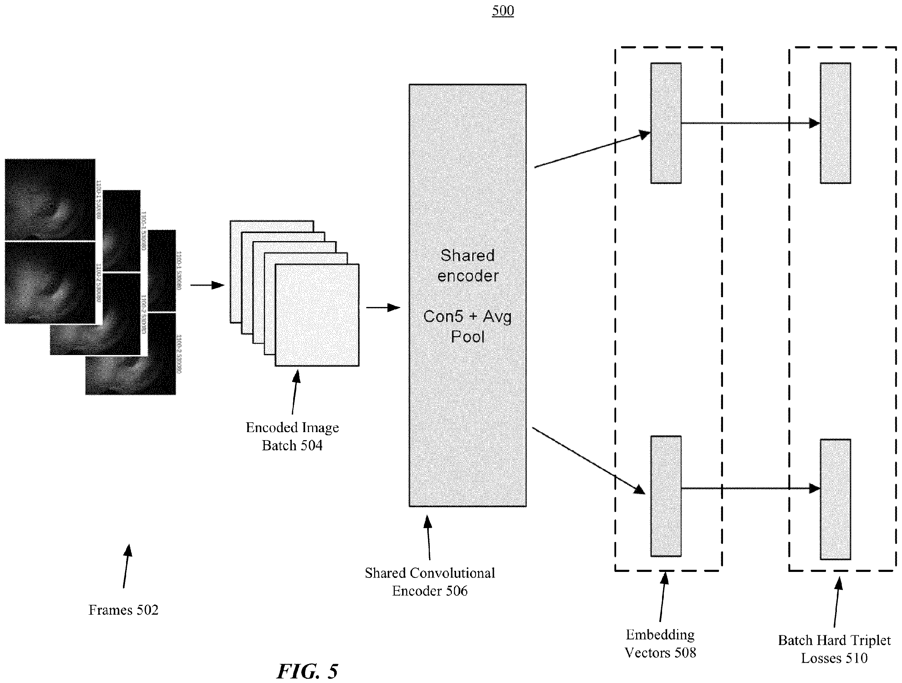

**FIG. 5** illustrates an example metric learning model training for eye re-authentication based on a plurality of periocular images from five internal-facing eye tracking cameras of headset 104. The metric learning model is trained using recorded periocular images from the selected users for model training. For example, the AR/VR systems can choose about ten recordings for each user in the training set and extract two camera images for all frames in the first 1.5 seconds of the recording when the user is forward-gazing during this time. FIG. 5 shows the AR/VR systems can train the metric learning model 500 using an encoded image batch 504 of the plurality of frames 502 of periocular images. Each frame can include two periocular images for left eye and right eye from a particular user. The AR/VR systems can train the metric learning model 500 to determine high-dimensional features at both high- and low-levels based on texture, color, and shape using the input encoded image batch 504. For example, the determined high-dimensional features include shape, texture, and color associated with eye, eyelashes, eyebrows, eye-lid, and other discriminative periocular characteristics for personal identification. The metric learning model 500 can assess the generated high-dimensional features using a shared convolutional encoder 506 to determine an embedding vector 508 for each image. For example, the shared convolutional encoder 506 can be based on a convolutional neural network using Conv-Relu-Conv blocks that do not share weights for the plurality of periocular images. As another example, a separate embedding head is attached to the determined embedding vector 508 per image which is L2 normalized. The metric learning model 500 can calculate a loss function for each head separately using the determined L-2 normalized embedding vectors 508. As a result, the metric learning model 500 can calculate a batch hard triplet loss 510 for each image and sum both the individual camera losses to determine a total loss for the training dataset.

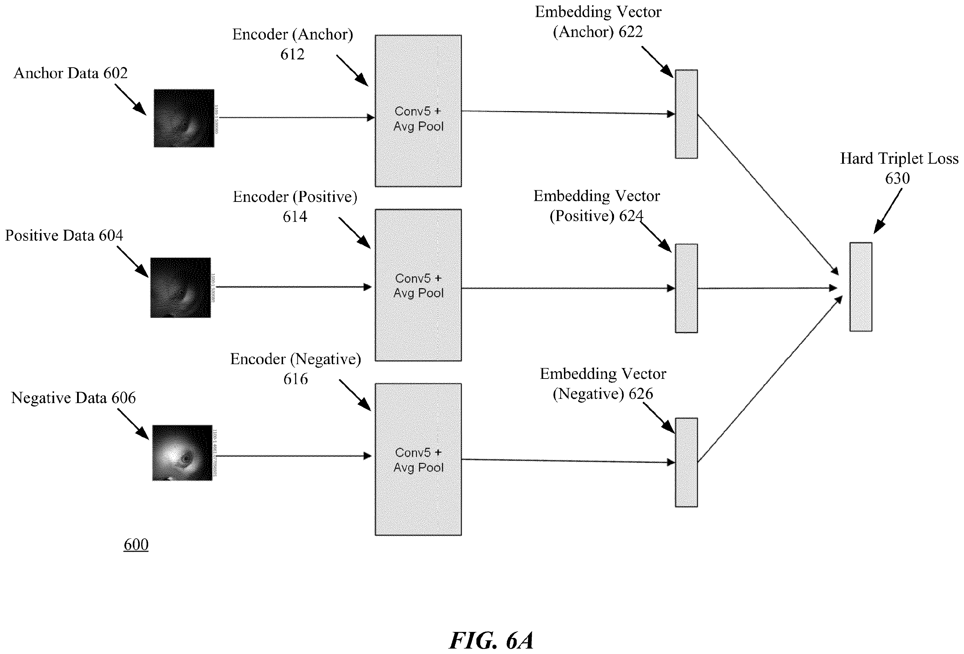

**FIG. 6A** illustrates an example metric learning model 600 based on a triplet loss using an anchor, a positive image, and a negative image. A conventional metric learning model can learn a similarity degree between two images through network learning. The metric learning model 600 can use images from three categories, such as anchor data 602, positive data 604, and negative data 606. For example, the anchor data 602 is a sample image chosen from a training set of images. The positive data 604 is an image which is similar to anchor 602. The negative data 606 is an image which is different from anchor 602. The metric learning model 600 can apply an encoder (anchor) 612 to determine an embedding vector (anchor) 622 based on the input anchor data 602. Likewise, the metric learning model 600 can apply an encoder (positive) 614 to determine an embedding vector (positive) 624 based on the input positive data 604. The metric learning model 600 can apply an encoder (negative) 616 to determine an embedding vector (negative) 626 based on the input negative data 606. Thus, the metric learning model 600 can determine a distance between each two images in the input data sets based on the embedding vector (anchor) 6222, the embedding vector (positive) 624, and the embedding vector (negative) 626.

The metric learning model 600 can also use a hard mining algorithm to find the hardest sample to train the model. In particular, the hard mining algorithm can calculate pairwise distances for embedding vectors of all periocular images of all training users. For all training users, the hard mining algorithm can evaluate all the determined pairwise distances and apply a random hardest negative sampling strategy to find the hardest triplets from the embedded feature space, which ensures that all triplets are valid. As a result, the metric learning model 600 can determine a hard triplet loss 630 based on equation 7 using a distance $d(a_i, p_i)$ between the anchor data 602 and the positive data 604, a distance $d(a_i, n_i)$ between the anchor data 602 and the negative data 604, and a margin $\alpha$. The metric learning model 600 can apply the hard triplet loss 630 to adjust weights of the metric learning model, such as encoder (anchor) 612, encoder (positive) 614, and encoder (negative) 616, to minimize the distance $d(a_i, p_i)$ between the anchor data 602 and the positive data 604 and maximize the distance $d(a_i, n_i)$ between the anchor data 602 and the negative data 604 until the difference between $d(a_i, n_i)$ and $d(a_i, n_i)$ is greater than the margin $\alpha$.

$$L(a,p,n) = \max\{d(a_i,p_i) - d(a_i,n_i) + \alpha, 0\} \qquad \text{Equation 7}$$

where $L(a, p, n)$ is a triplet loss for anchor $a$, positive p, and negative $n$. $d(a_i, p_i)$ is a distance between the $i$-th anchor and the $i$-th positive sample. $d(a_i, n_i)$ is a distance between the $i$-th anchor and the $i$-th negative sample, $\alpha$ is a margin. $\max\{a, b\}$ is a function to output a is a is greater than b, otherwise output b.

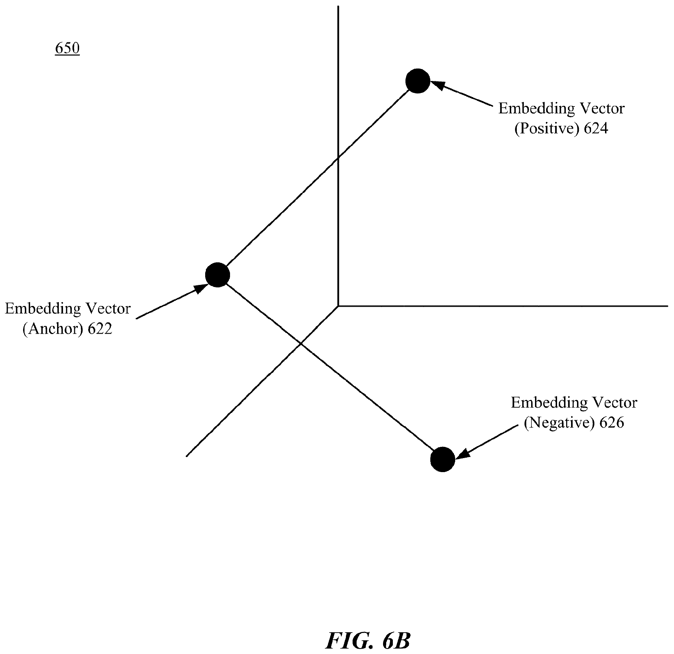

**FIG. 6B** illustrates an example embedding space 650 based on an anchor, a positive image, and a negative image. The metric learning model 600 can map the determined high-dimensional embeddings to a multi-dimensional embedding space 650. For example, FIG. 6B shows a 3D embedding space 650 which includes three three-dimensional (3D) embeddings, such as embedding vector (anchor) 622, embedding vector (positive) 624, and embedding vector (negative) 626. The weights in the metric learning model are determined to minimize the distance between the feature vectors of anchor and positive and maximize the distance between anchor and negative until the differences of these two distances is larger than a margin $\alpha$. As a result, the metric learning model is optimized to pull positive images of the identity closer in a natural cluster and push negative images of different identities away from each other. In the end, the triplet loss based metric learning model can evaluate the nature cluster of positive images of the identity closer for eye re-authentication.

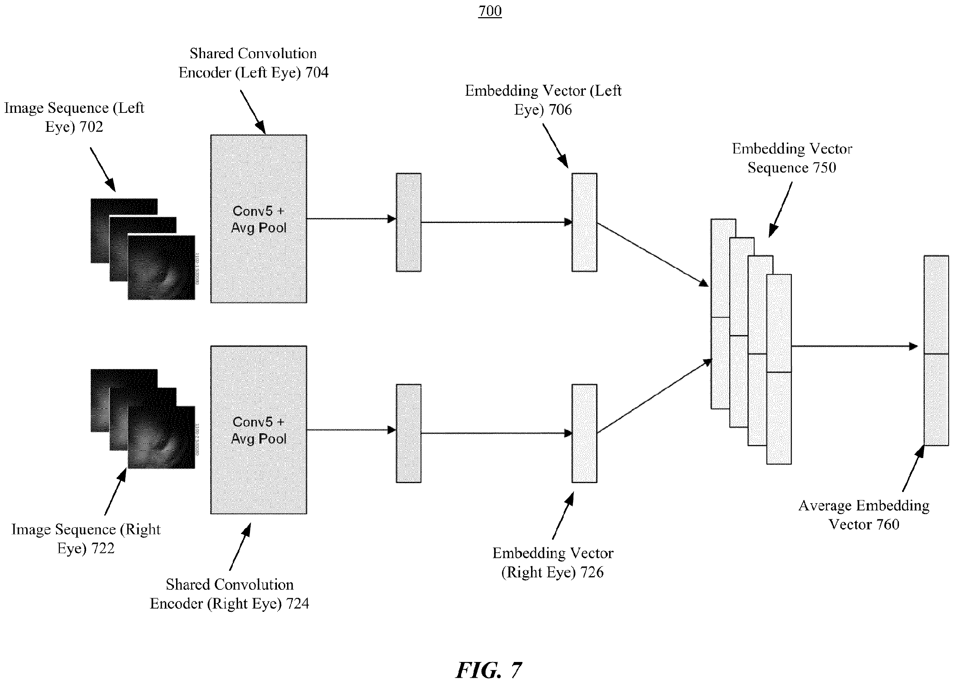

**FIG. 7** illustrates an example metric learning model 700 for both left and right eyes of a user. The metric learning model 700 can be trained on both left eye and right eye images from a user. In particular, FIG. 7 shows the AR/VR systems obtain a sequence of left eye images, such as image sequence (left eye) 702, and a sequence of right eye images, such as image sequence (right eye) 722. Each sequence includes a plurality of frames captured from the incoming video stream of infrared cameras of the headset 104. The AR/VR systems can train a metric learning model 700 based on a shared convolution encoder (left eye) 704 to determine an embedding vector (left eye) 706 for each image. Likewise, the AR/VR systems can train another metric learning model based on a shared convolution encoder (right eye) 724 to determine an embedding vector (right eye) 726 for each image. In particular, the shared convolution encoder (left eye) 704 and the shared convolution encoder (right eye) 724 can use the same weights for the same image. The AR/VR systems can determine an embedding vector sequence 750 by combining the determined embedding vectors for the plurality of frames in the sequences of left and right eye images. As a result, the AR/VR systems can determine an average embedding vector 760 by averaging the embedding vector sequence 750 over all the frames in the input image sequences.

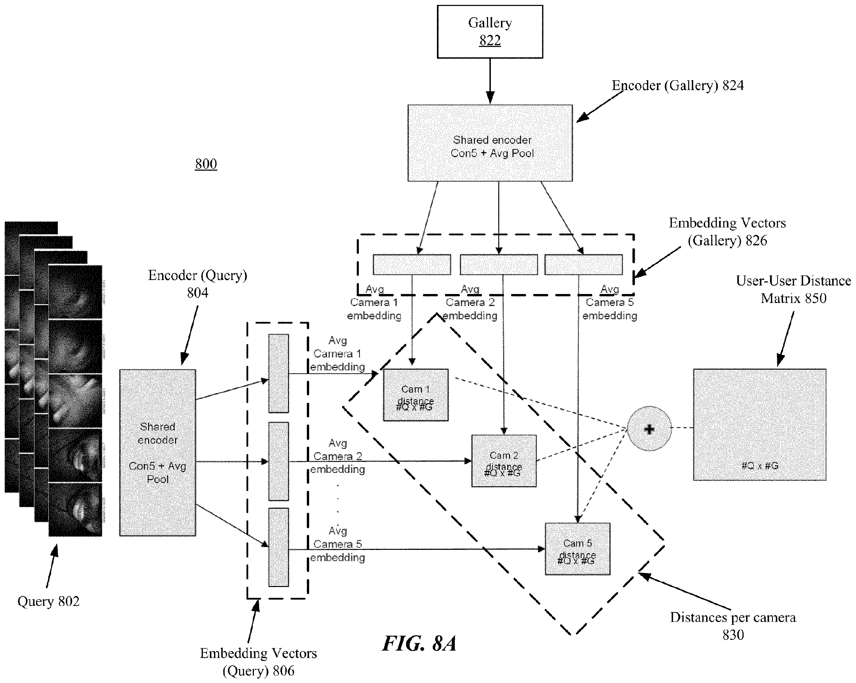

**FIG. 8A** illustrates an example offline evaluation 800 of a metric learning model. The AR/VR systems can apply the offline evaluation 800 to increase model robustness for real-time implementation of the metric learning model. The AR/VR systems can split recordings into query and gallery recordings for each test user. The AR/VR systems can extract all camera images for all frames in the first 1.5 s of each recording to create a query 802 and a gallery 822. The query 802 can be a collection of randomly selected N frames from all query recordings for the test users. The gallery 822 can be a collection of randomly selected M frames from all gallery recordings for the test users. For each test user from the gallery 822, the AR/VR systems can determine one or more embedding vectors (gallery) 826 for each image of the headset 104 based on a metric learning model, such as encoder (gallery) 824. Likewise, for each user from the query 802, the AR/VR systems can determine one or more embedding vectors (query) 820 for each image of the headset 104 based on a metric learning model, such as encoder (query) 804.

Furthermore, the AR/VR systems can calculate a distance per camera 830 between the test users in the query 802 and the test users in the gallery 822 based on equation 1 using embedding vectors (query) 806 and embedding vectors (gallery) 826 for each image. As a result, the AR/VR systems can determine a similarity score between the test users in the query 802 and in the gallery 822 for constructing a user-user distance matrix 850 which includes similarity scores between the test users in the query 802 and in the gallery 826. The AR/VR systems can apply a Nearest Neighbor algorithm to identify a user in the query 802 from all the users in the gallery 822.

The AR/VR systems can evaluate the performance of the trained metric learning model, such as encoder (query) 804, based on a predetermined TAR @ FAR. For example, the AR/VR systems can identify a similarity threshold such that a wrong user is given access only 1 in 50,000 times for a TAR@FAR 2e-5. The AR/VR systems can apply the identified similarity threshold as a decision engine on the similarity scores to determine TAR based on how many times the correct user is admitted. The AR/VR systems can use the offline evaluation to train the metric learning model to maximize the TAR@FAR value. The AR/VR systems can also apply this approach for real-time implementation as all the frames are captured within about a 10 millisecond (ms) interval.

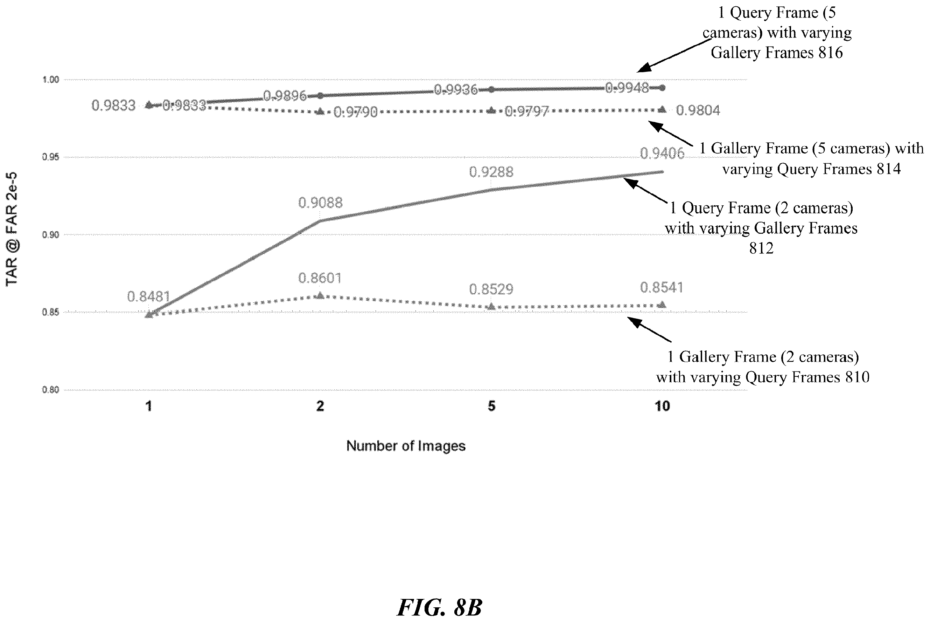

**FIG. 8B** illustrates an example metric learning model performance associated with the effect of averaging over multiple frames. The AR/VR systems can determine embedding vectors using a plurality of frames of periocular images. FIG. 8B shows the number of frames that embedding vectors are averaged over has an effect on the TAR@FAR 2e-5 performance of the metric learning model. For a two camera model, when the input data has one gallery frame, the metric learning model has a TAR@FAR 2e-5 performance, such as 1 gallery frame (2 cameras) with varying query frames 810, in the range of 0.8481-0.8601 for 1-10 query frames of periocular images. However, when the input data has one query frame, the metric learning model has a TAR@FAR 2e-5 performance, such as 1 query frame (2 cameras) with varying gallery frames 812, which increases from 0.8481 for 1 gallery frame to 0.9406 for 10 gallery frames. Likewise, for a five camera model, the metric learning model has a TAR@FAR 2e-5 performance, such as 1 gallery frame (5 cameras) with varying query frames 814, in the range of 0.9790-0.9833 for 1-10 query frames. However, when the input data has one query frame, the metric learning model has a TAR@FAR 2e-5 performance, such as 1 query frame (5 cameras) with varying gallery frames 816, which increases from 0.9833 for 1 gallery frame to 0.9948 for 10 gallery frames. It is clear that averaging over multiple gallery frames can help more than averaging over multiple query frames because query frames are temporally correlated.

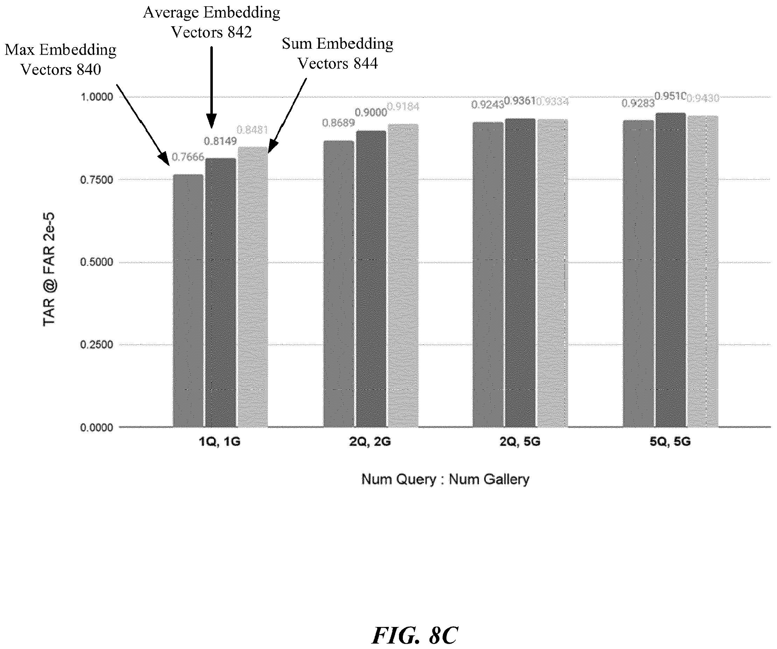

**FIG. 8C** illustrates an example metric learning model performance associated with the effect of the aggregating function for a two camera model. The AR/VR systems can determine embedding vectors using a plurality of frames of periocular images based on an aggregating function. For example, the embedding vectors can be determined by choosing the maximum embedding vector for the plurality of frames of periocular images. The embedding vectors can be determined by choosing the average embedding vector over the plurality of frames of periocular images. The embedding vectors can be determined by choosing the sum embedding vector over the plurality of frames of periocular images. FIG. 8C shows the comparison of the effect of three aggregating functions on the TAR@FAR 2e-5 performance of a metric learning model. In particular, when the input data has one query frame and one gallery frame (1Q, 1G), the metric learning model has a TAR@FAR 2e-5 performance of 0.7666 for maximum embedding vectors 840, 0.8149 for average embedding vectors 842, and 0.8481 for sum embedding vectors 844. The comparison result is very similar for other query-gallery frame pairs, such as two query frames and 2 gallery frames (2Q, 2G), two query frames and 5 gallery frames (2Q, 5G), and five query frames and five gallery frames (5Q, 5G). It is clear that the sum embedding aggregating function has an overall good performance regardless of how many frames are involved.

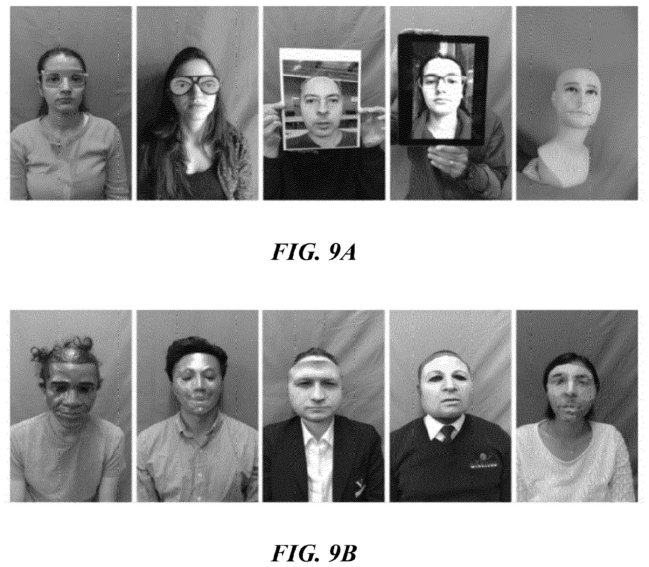

**FIGS. 9A and 9B** illustrate example presentation attacks for presentation attack detection. The presentation attacks seek to fool the authentication system by presenting artificial eye images, such as printed iris images of an individual or cosmetic contacts. FIG. 9A shows presentation attacks with paper glasses, funny eyes glasses, print, replay, and fake head from left to right. FIG. 9B shows presentation attacks with rigid Obama plastic Halloween mask, rigid transparent plastic mask, rigid custom make realistic mask, flexible custom made realistic mask, paper mask and from left to right. The user identification architecture 200 can apply a knowledge distillation algorithm 288 to learn both presentation attack detection and eye re-authentication to help with the effect of forgetting in a joint framework which is superior to multitask learning. In particular, the user identification architecture 200 can use a trained metric learning model $M_{eye}$ as a teacher model for eye re-authentication as a starting model to update a machine learning model $M_{eye\_pad}$ as a student model based on a presentation attack detection dataset. The user identification architecture 200 can minimize a knowledge distillation loss defined as a difference between the pairwise teacher similarity matrix and the pairwise student similarity matrix.

As a result, the knowledge distillation algorithm can be applied to supervise the training of the student model by capturing and transferring the knowledge of a more expensive teacher model. The knowledge distillation algorithm can be applied to reduce the effect of forgetting to identify input video streams belonging to a real user while rejecting other users deliberately trying to impersonate the true user. In particular, the AR/VR systems can determine an optimized machine learning model $M_{eye\_pad}$ with a Spoof Acceptance Rate (SAR) below a predetermined SAR threshold, such as 7%, to detect spoof associated with presentation attacks and a net False Rejection Rate (FRR) below a predetermined FRR threshold, such as 10%. The Spoof Acceptance Rate is a measure of how many times presentation attacks are accepted as true users. The net False Rejection Rate is based on the total number of users rejected during eye re-authentication and presentation attack detection and the total number of users in the input dataset.

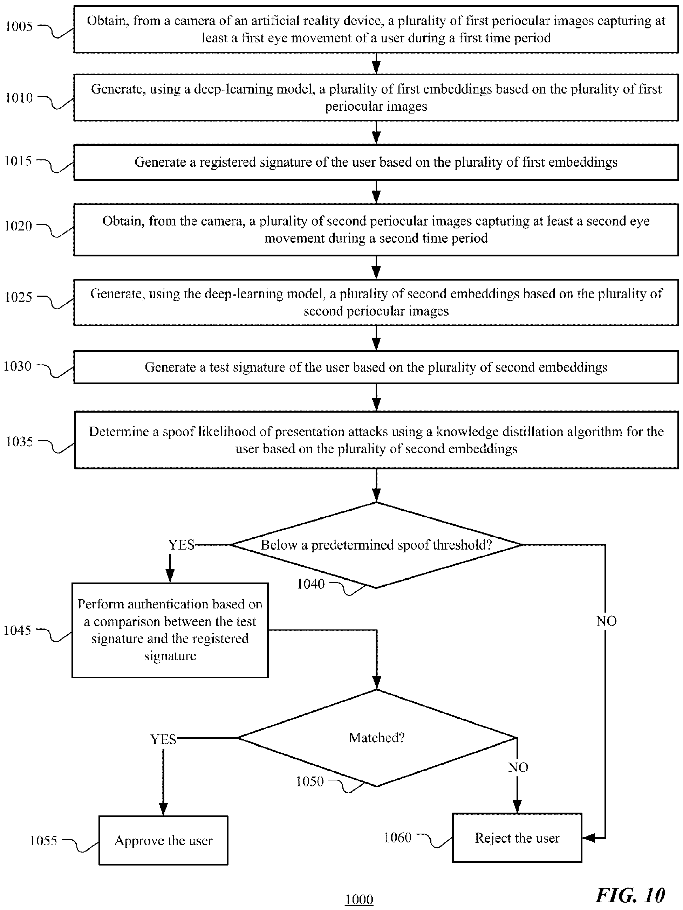

**FIG. 10** illustrates an example method 1000 for performing eye re-authentication and presentation attack detection using periocular images. The method 1000 may begin at step 1005, where the computing system can obtain a plurality of first periocular images of a user during a first time period from a camera of an artificial reality device. In particular embodiments, the plurality of first periocular images can be video streams live-captured by the camera of a wearable AR/VR device. In particular embodiments, the camera can be an internal-facing eye tracking camera of the wearable AR/VR device. In particular embodiments, the plurality of first periocular images can be stored in a database. In particular embodiments, the plurality of first periocular images can include a plurality of frames, such as N frames, of periocular images for various parts of a periocular region of the user during the first time period. At step 1010, the method may use a deep-learning model to generate a plurality of first embeddings based on the plurality of first periocular images. The deep-learning model can be a metric learning model based on a shared convolutional encoder. In particular, the metric learning model can include Conv-Relu-Conv blocks that do not share weights for the plurality of periocular images. At step 1015, the method can generate a registered signature of the user based on the plurality of first embeddings.

At step 1020, the method can obtain a plurality of second periocular images of the user during a second time period, from the camera. In particular embodiments, the plurality of second periocular images can be video streams live-captured by the camera of the wearable AR/VR device. In particular embodiments, the plurality of second periocular images can include a plurality of frames, such as M frames, of periocular images for various parts of a periocular region of the user during the second time period. At step 1025, the method can use the deep-learning model to generate a plurality of second embeddings based on the plurality of second periocular images. At step 1030, the method can generate a test signature of the user based on the plurality of second embeddings. At step 1035, the method can determine a spoof likelihood of presentation attacks using a knowledge distillation algorithm for the user based on the plurality of second embeddings. The method can update the deep learning model using the knowledge distillation algorithm to detect spoof associated with presentation attacks based on the plurality of second embeddings. At step 1040, the method can make a determination whether the spoof likelihood of presentation attacks is below a predetermined spoof threshold. Where the spoof likelihood of presentation attacks is below a predetermined likelihood threshold, the process may proceed to step 1045 to perform user authentication. Where the spoof likelihood of presentation attacks is above the predetermined likelihood threshold, the process may proceed to step 1060 to reject the user. At step 1045, the method can perform authentication based on a comparison between the test signature and the registered signature. The method can determine, using the updated deep learning model, a similarity score based on the test signature and the registered signature. At step 1050, the method can make a determination whether the test signature matches the registered signature using the similarity score. Where the similarity score is larger than a similarity threshold, the process may proceed to step 1055 to approve the user. Where the similarity score is smaller than a similarity threshold, the process may proceed to step 1060 to reject the user.

Particular embodiments may repeat one or more steps of the method of FIG. 10, where appropriate. Although this disclosure describes and illustrates particular steps of the method of FIG. 10 as occurring in a particular order, this disclosure contemplates any suitable steps of the method of FIG. 10 occurring in any suitable order. Moreover, although this disclosure describes and illustrates an example method for performing eye-reauthentication and presentation attack detection including the particular steps of the method of FIG. 10, this disclosure contemplates any suitable method for performing eye-reauthentication and presentation attack detection including any suitable steps, which may include all, some, or none of the steps of the method of FIG. 10, where appropriate. Furthermore, although this disclosure describes and illustrates particular components, devices, or systems carrying out particular steps of the method of FIG. 10, this disclosure contemplates any suitable combination of any suitable components, devices, or systems carrying out any suitable steps of the method of FIG. 10.

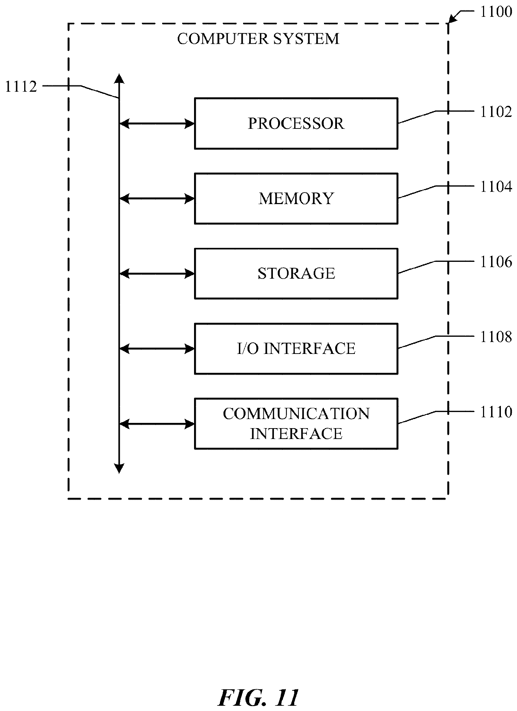

**FIG. 11** illustrates an example computer system 1100. In particular embodiments, one or more computer systems 1100 perform one or more steps of one or more methods described or illustrated herein. In particular embodiments, one or more computer systems 1100 provide functionality described or illustrated herein. In particular embodiments, software running on one or more computer systems 1100 performs one or more steps of one or more methods described or illustrated herein or provides functionality described or illustrated herein. Particular embodiments include one or more portions of one or more computer systems 1100. Herein, reference to a computer system may encompass a computing device, and vice versa, where appropriate. Moreover, reference to a computer system may encompass one or more computer systems, where appropriate.

This disclosure contemplates any suitable number of computer systems 1100. This disclosure contemplates computer system 1100 taking any suitable physical form. As example and not by way of limitation, computer system 1100 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, an augmented/virtual reality device, or a combination of two or more of these. Where appropriate, computer system 1100 may include one or more computer systems 1100; be unitary or distributed; span multiple locations; span multiple machines; span multiple data centers; or reside in a cloud, which may include one or more cloud components in one or more networks. Where appropriate, one or more computer systems 1100 may perform without substantial spatial or temporal limitation one or more steps of one or more methods described or illustrated herein. As an example and not by way of limitation, one or more computer systems 1100 may perform in real time or in batch mode one or more steps of one or more methods described or illustrated herein. One or more computer systems 1100 may perform at different times or at different locations one or more steps of one or more methods described or illustrated herein, where appropriate.

In particular embodiments, computer system 1100 includes a processor 1102, memory 1104, storage 1106, an input/output (I/O) interface 1108, a communication interface 1110, and a bus 1112. Although this disclosure describes and illustrates a particular computer system having a particular number of particular components in a particular arrangement, this disclosure contemplates any suitable computer system having any suitable number of any suitable components in any suitable arrangement.

In particular embodiments, processor 1102 includes hardware for executing instructions, such as those making up a computer program. As an example and not by way of limitation, to execute instructions, processor 1102 may retrieve (or fetch) the instructions from an internal register, an internal cache, memory 1104, or storage 1106; decode and execute them; and then write one or more results to an internal register, an internal cache, memory 1104, or storage 1106. In particular embodiments, processor 1102 may include one or more internal caches for data, instructions, or addresses. This disclosure contemplates processor 1102 including any suitable number of any suitable internal caches, where appropriate. As an example and not by way of limitation, processor 1102 may include one or more instruction caches, one or more data caches, and one or more translation lookaside buffers (TLBs). Instructions in the instruction caches may be copies of instructions in memory 1104 or storage 1106, and the instruction caches may speed up retrieval of those instructions by processor 1102. Data in the data caches may be copies of data in memory 1104 or storage 1106 for instructions executing at processor 1102 to operate on; the results of previous instructions executed at processor 1102 for access by subsequent instructions executing at processor 1102 or for writing to memory 1104 or storage 1106; or other suitable data. The data caches may speed up read or write operations by processor 1102. The TLBs may speed up virtual-address translation for processor 1102. In particular embodiments, processor 1102 may include one or more internal registers for data, instructions, or addresses. This disclosure contemplates processor 1102 including any suitable number of any suitable internal registers, where appropriate. Where appropriate, processor 1102 may include one or more arithmetic logic units (ALUs); be a multi-core processor; or include one or more processors 1102. Although this disclosure describes and illustrates a particular processor, this disclosure contemplates any suitable processor.

In particular embodiments, memory 1104 includes main memory for storing instructions for processor 1102 to execute or data for processor 1102 to operate on. As an example and not by way of limitation, computer system 1100 may load instructions from storage 1106 or another source (such as, for example, another computer system 1100) to memory 1104. Processor 1102 may then load the instructions from memory 1104 to an internal register or internal cache. To execute the instructions, processor 1102 may retrieve the instructions from the internal register or internal cache and decode them. During or after execution of the instructions, processor 1102 may write one or more results (which may be intermediate or final results) to the internal register or internal cache. Processor 1102 may then write one or more of those results to memory 1104. In particular embodiments, processor 1102 executes only instructions in one or more internal registers or internal caches or in memory 1104 (as opposed to storage 1106 or elsewhere) and operates only on data in one or more internal registers or internal caches or in memory 1104 (as opposed to storage 1106 or elsewhere). One or more memory buses (which may each include an address bus and a data bus) may couple processor 1102 to memory 1104. Bus 1112 may include one or more memory buses, as described below. In particular embodiments, one or more memory management units (MMUs) reside between processor 1102 and memory 1104 and facilitate accesses to memory 1104 requested by processor 1102. In particular embodiments, memory 1104 includes random access memory (RAM). This RAM may be volatile memory, where appropriate. Where appropriate, this RAM may be dynamic RAM (DRAM) or static RAM (SRAM). Moreover, where appropriate, this RAM may be single-ported or multi-ported RAM. This disclosure contemplates any suitable RAM. Memory 1104 may include one or more memories 1104, where appropriate. Although this disclosure describes and illustrates particular memory, this disclosure contemplates any suitable memory.

In particular embodiments, storage 1106 includes mass storage for data or instructions. As an example and not by way of limitation, storage 1106 may include a hard disk drive (HDD), a floppy disk drive, flash memory, an optical disc, a magneto-optical disc, magnetic tape, or a Universal Serial Bus (USB) drive or a combination of two or more of these. Storage 1106 may include removable or non-removable (or fixed) media, where appropriate. Storage 1106 may be internal or external to computer system 1100, where appropriate. In particular embodiments, storage 1106 is non-volatile, solid-state memory. In particular embodiments, storage 1106 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 1106 taking any suitable physical form. Storage 1106 may include one or more storage control units facilitating communication between processor 1102 and storage 1106, where appropriate. Where appropriate, storage 1106 may include one or more storages 1106. Although this disclosure describes and illustrates particular storage, this disclosure contemplates any suitable storage.

In particular embodiments, I/O interface 1108 includes hardware, software, or both, providing one or more interfaces for communication between computer system 1100 and one or more I/O devices. Computer system 1100 may include one or more of these I/O devices, where appropriate. One or more of these I/O devices may enable communication between a person and computer system 1100. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 1108 for them. Where appropriate, I/O interface 1108 may include one or more device or software drivers enabling processor 1102 to drive one or more of these I/O devices. I/O interface 1108 may include one or more I/O interfaces 1108, where appropriate. Although this disclosure describes and illustrates a particular I/O interface, this disclosure contemplates any suitable I/O interface.

In particular embodiments, communication interface 1110 includes hardware, software, or both providing one or more interfaces for communication (such as, for example, packet-based communication) between computer system 1100 and one or more other computer systems 1100 or one or more networks. As an example and not by way of limitation, communication interface 1110 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 1110 for it. As an example and not by way of limitation, computer system 1100 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 1100 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 1100 may include any suitable communication interface 1110 for any of these networks, where appropriate. Communication interface 1110 may include one or more communication interfaces 1110, where appropriate. Although this disclosure describes and illustrates a particular communication interface, this disclosure contemplates any suitable communication interface.

In particular embodiments, bus 1112 includes hardware, software, or both coupling components of computer system 1100 to each other. As an example and not by way of limitation, bus 1112 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 1112 may include one or more buses 1112, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the example embodiments described or illustrated herein that a person having ordinary skill in the art would comprehend. The scope of this disclosure is not limited to the example embodiments described or illustrated herein. Moreover, although this disclosure describes and illustrates respective embodiments herein as including particular components, elements, feature, functions, operations, or steps, any of these embodiments may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular embodiments as providing particular advantages, particular embodiments may provide none, some, or all of these advantages.

**Claims**

1. A method comprising, by a computing system of an artificial reality, AR, device:

   obtaining, from a camera of the AR device, a plurality of first periocular images of a user during a first time period;
   generating, using a deep-learning model, a plurality of first embeddings based on the plurality of first periocular images;
   generating a registered signature of the user based on the plurality of first embeddings;
   obtaining, from the camera, a plurality of second periocular images of the user during a second time period;
   generating, using the deep-learning model, a plurality of second embeddings based on the plurality of second periocular images;
   generating a test signature of the user based on the plurality of second embeddings; and
   performing authentication based on a comparison between the test signature and the registered signature.

2. The method of claim 1, further comprising:

   determining, using a knowledge distillation algorithm, a spoof likelihood of presentation attacks based on the plurality of second embeddings for the plurality of second periocular images;
   determining, using the deep-learning model, a similarity score between the plurality of first embeddings for the registered signature and the plurality of second embeddings for the test signature; and
in response to determining that the similarity score is greater than a predetermined similarity threshold and the spoof likelihood of presentation attacks is below a predetermined spoof threshold, authenticating the user.

3. The method of claim 2, further comprising:
in response to determining that the similarity score is smaller than the predetermined similarity threshold, rejecting the user.

4. The method of claim 2 or 3, further comprising:
in response to determining that the spoof likelihood of presentation attacks is greater than the predetermined spoof threshold, rejecting the user.

5. The method of any of claims 2 to 4,
wherein the knowledge distillation algorithm includes a presentation detection loss based on a standard cross-entropy classification loss to classify a given image as a spoof image and a distillation loss as a regularization term.

6. The method of any preceding claim,

   wherein the authentication of the user occurs in conjunction with predetermined time periods, and
   wherein the authentication of the user is triggered when the user navigates into a new virtual environment.

7. The method of any preceding claim,
wherein the deep-learning model is a metric learning model using a shared convolutional encoder which includes Conv-Relu-Conv blocks and does not share weights for the plurality of first periocular images and the plurality of second periocular images.

8. The method of any preceding claim, further comprising:

   calculating a user-user distance matrix based on similarity scores between a plurality of users;
   identifying a user from the plurality of users using a Nearest Neighbor algorithm and the user-user distance matrix; and
   evaluating the performance of the deep-learning model based on True Acceptance Rate at False Acceptance Rate and the user-user distance matrix.

9. One or more computer-readable storage media embodying software that is operable when executed to carry out the method of any preceding claim.

10. A system comprising:

    one or more processors; and
    one or more computer-readable storage media coupled to one or more of the processors and comprising instructions operable when executed by one or more of the processors to cause the system to carry out the method of any of claims 1 to 8.

11. A computer program product comprising instructions which, when the program is executed by a computer, cause the computer to carry out the method of any of claims 1 to 8.

**FIG. 1A**

EP 4 390 862 A1

100B

Computer 120

Frame 112

Head-mounted Display 110

Display 114

Display 114

FIG. 1B

*FIG. 2*

**200**

Enrollment Manager 230

Machine Learning Module A 232
- Machine Learning Models A 234
- Machine Learning Algorithms A 236

Registered Signature 216
- Embedding Vector A1 218
- Embedding Vector A2 220
- . . .
- Embedding Vector A5 226

Database 296

Image Data A 204
- Camera A1 206
- Camera A2 208
- . . .
- Camera A5 214

User A 202

Re-authentication Manager 280

Machine Learning Module B 282
- Machine Learning Models B 284
- Machine Learning Algorithms B 286
- Knowledge Distillation Algorithms 288
- Presentation Attack Data 290

Testing Signature 266
- Embedding Vector B1 268
- Embedding Vector B2 270
- . . .
- Embedding Vector B5 276

Matching Module 240
- Similarity Scores 242
- Spoof Likelihoods 244
- Threshold Data 246
- User-User Distance Matrix 248
- Nearest Neighbor Algorithm 250

Image Data B 254
- Camera B1 256
- Camera B2 258
- . . .
- Camera B5 264

User B 252

Camera A1
206

Camera A2
208

Camera A3
210

Camera A4
212

Camera A5
214

**Machine Learning Models 234**

| Hidden Layer A 310 | Hidden Layer B 312 | Hidden Layer C 314 |

300

Embedding Vector
A1 218

Embedding Vector
A2 220

Embedding Vector
A3 222

Embedding Vector
A4 224

Embedding Vector
A5 226

*FIG. 3*

Image (Camera 1)
402

Image (Camera 2)
404

Image (Camera 3)
406

Image (Camera 4)
408

Image (Camera 5)
410

*FIG. 4A*

Eyelid 426

Pupil 424

Iris 430

Eye 422

Eyebrow 428

*FIG. 4B*

23

Frames 502

Encoded Image
Batch 504

Shared
encoder

Con5 + Avg
Pool

Shared Convolutional
Encoder 506

Embedding
Vectors 508

Batch Hard Triplet
Losses 510

*FIG. 5*

EP 4 390 862 A1

**FIG. 6A**

650

Embedding Vector
(Positive) 624

Embedding Vector
(Anchor) 622

Embedding Vector
(Negative) 626

*FIG. 6B*

EP 4 390 862 A1

Image Sequence (Left Eye) 702

Shared Convolution Encoder (Left Eye) 704

Embedding Vector (Left Eye) 706

Embedding Vector Sequence 750

Conv5 + Avg Pool

Image Sequence (Right Eye) 722

Shared Convolution Encoder (Right Eye) 724

Conv5 + Avg Pool

Embedding Vector (Right Eye) 726

Average Embedding Vector 760

*FIG. 7*

*FIG. 8A*

*FIG. 8B*

EP 4 390 862 A1

FIG. 8C

*FIG. 9A*

*FIG. 9B*

1005 — Obtain, from a camera of an artificial reality device, a plurality of first periocular images capturing at least a first eye movement of a user during a first time period

1010 — Generate, using a deep-learning model, a plurality of first embeddings based on the plurality of first periocular images

1015 — Generate a registered signature of the user based on the plurality of first embeddings

1020 — Obtain, from the camera, a plurality of second periocular images capturing at least a second eye movement during a second time period

1025 — Generate, using the deep-learning model, a plurality of second embeddings based on the plurality of second periocular images

1030 — Generate a test signature of the user based on the plurality of second embeddings

1035 — Determine a spoof likelihood of presentation attacks using a knowledge distillation algorithm for the user based on the plurality of second embeddings

YES —— Below a predetermined spoof threshold? 1040

1045 — Perform authentication based on a comparison between the test signature and the registered signature

NO

YES —— Matched? 1050

NO

1055 — Approve the user

1060 — Reject the user

1000

*FIG. 10*

*FIG. 11*

EP 4 390 862 A1

Europäisches
Patentamt

European
Patent Office

Office européen
des brevets

# EUROPEAN SEARCH REPORT

Application Number

EP 23 20 7887

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BOUTROS FADI ET AL: "Iris and periocular biometrics for head mounted displays: Segmentation, recognition, and synthetic data generation", IMAGE AND VISION COMPUTING, ELSEVIER, GUILDFORD, GB, vol. 104, 22 August 2020 (2020-08-22), XP086372022, ISSN: 0262-8856, DOI: 10.1016/J.IMAVIS.2020.104007 [retrieved on 2020-08-22] | 1,6-11 | INV. G06V10/764 G06V10/82 G06V40/16 G06V40/40 |
| Y | * abstract * * section 4 * * section 3.2.2.6 * * figure 1 * ----- | 2-5 | |
| Y | DHAR PRITHVIRAJ ET AL: "EyePAD++: A Distillation-based approach for joint Eye Authentication and Presentation Attack Detection using Periocular Images", 2022 IEEE/CVF CONFERENCE ON COMPUTER VISION AND PATTERN RECOGNITION (CVPR), IEEE, 18 June 2022 (2022-06-18), pages 20186-20195, XP034194933, DOI: 10.1109/CVPR52688.2022.01958 [retrieved on 2022-09-27] * section 3.1 * * figure 2 * ----- -/-- | 2-5 | TECHNICAL FIELDS SEARCHED (IPC) G06V |

The present search report has been drawn up for all claims

| Place of search | Date of completion of the search | Examiner |
|---|---|---|
| The Hague | 14 February 2024 | Angelopoulou, Maria |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

34

Europäisches
Patentamt

European
Patent Office

Office européen
des brevets

## EUROPEAN SEARCH REPORT

**Application Number**

EP 23 20 7887

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HUANG GAO ET AL: "Densely Connected Convolutional Networks", 2017 IEEE CONFERENCE ON COMPUTER VISION AND PATTERN RECOGNITION (CVPR), IEEE COMPUTER SOCIETY, US, 21 July 2017 (2017-07-21), pages 2261-2269, XP033249569, ISSN: 1063-6919, DOI: 10.1109/CVPR.2017.243 [retrieved on 2017-11-06] * section 3 * * table 1 * | 1-11 | |

TECHNICAL FIELDS
SEARCHED      (IPC)

The present search report has been drawn up for all claims

| Place of search | Date of completion of the search | Examiner |
|---|---|---|
| The Hague | 14 February 2024 | Angelopoulou, Maria |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

&: member of the same patent family, corresponding
document

EPO FORM 1503 03.82 (P04C01)